# EUROPEAN PATENT APPLICATION

(11) **EP 2 570 649 A1**
(43) Date of publication of application: **20.03.2013**
(21) Application number: 10851391.2
(22) Date of filing: 12.05.2010
(51) Int. Cl.: F02M 55/02

(54) **CONTROL DEVICE FOR DIESEL ENGINE**

(71) Applicant: TOYOTA JIDOSHA KABUSHIKI KAISHA, Toyota-shi, Aichi-ken, 471-8571 (JP)
(72) Inventor: ENOMOTO, Hiroshi, Toyota-shi, Aichi 471-8571 (JP)
(74) Representative: Winter, Brandl, Fürniss, Hübner, Röss, Kaiser, Polte - Partnerschaft
(86) International application number: PCT/JP2010/058026
(87) International publication number: WO 2011/142008

(57) **Abstract**

A diesel engine (1) is provided with a common rail (33) to which fuel pressurized by an engine-driven supply pump (32) is supplied, and a fuel injection valve (34) which injects and supplies the fuel in the common rail (33) into a cylinder (11). When the rotation phase of the engine (1) is detected when the engine (1) is restarted, an electronic control device (50) detects the actual rail pressure that is the fuel pressure within the common rail (33) by a rail pressure sensor (55) and determines whether or not the actual rail pressure is greater than or equal to a lower limit within a fuel pressure range in which the operation of the fuel injection valve (34) is ensured. When determining that the actual rail pressure is greater than or equal to the lower limit, the electronic control device performs the first fuel injection at a fuel injection timing immediately after the determination and sets the injection amount command value for the fuel injection valve (34) for performing the first fuel injection larger as the actual rail pressure is lower.

## Description

### TECHNICAL FIELD

The present invention relates to a control device for a diesel engine that is applied to a diesel engine provided with an accumulator container, to which fuel pressurized by an engine-driven fuel pump is supplied, and a fuel injection valve for injecting and supplying fuel retained in the accumulator container into a cylinder. More specifically, the present invention pertains to a control device that performs a fuel injection control through a command sent to the fuel injection valve.

### BACKGROUND ART

This type of control device for a diesel engine is disclosed in, for example, Patent Document 1. In general control devices that have been used for a diesel engines including the one disclosed in Patent Document 1, fuel pressurized in an engine-driven fuel pump is supplied to a common rail serving as an accumulator container to increase the fuel pressure in the common rail (referred to as rail pressure hereinafter), and a command is output to a fuel injection valve through a control device to cause the fuel injection valve to inject fuel retained in the common rail into a cylinder.

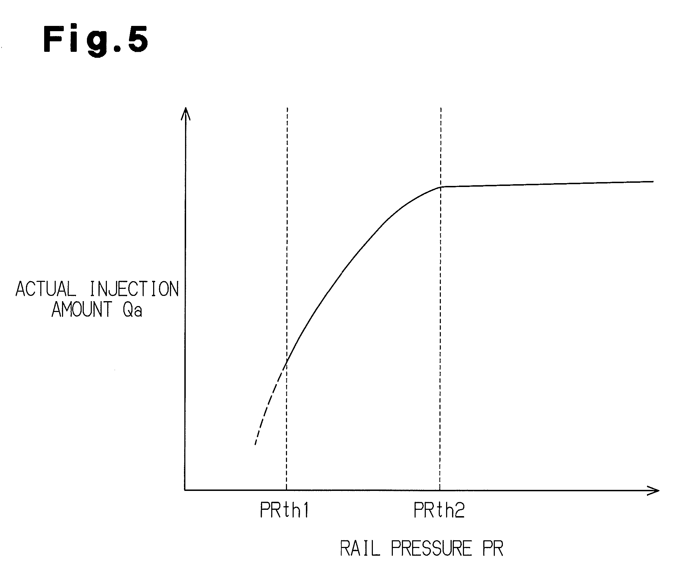

Also, as shown in Fig. 5, when an injection amount command value set for a fuel injection valve, or a value commanding a valve opening period, remains the same, the amount of fuel actually injected from the fuel injection valve (referred to as actual injection amount Qa hereinafter) decreases as a rail pressure PR is lowered. If the rail pressure PR falls below a predetermined value PRth2, the actual injection value Qa decreases significantly in response to reduction of the rail pressure PR. Furthermore, if the rail pressure PR falls below a lower limit value PRth1 (PRth1 < PRth2) in a fuel pressure range that ensures operation of the fuel injection valve, fuel may not be injected even if the fuel injection valve is opened. It is thus impossible to ignore the degree of dependence of the rail pressure for an actual amount of injection when the rail pressure is low. Therefore, in conventional control devices, execution of fuel injection is authorized when a condition is met that the rail pressure is raised to the predetermined value PRth2 (PRth2 > PRth1) or higher, at which the degree of dependence of the rail pressure for an actual amount of injection can be ignored.

In addition, such control devices include a control device that automatically stops and restarts the engine as follows for the purpose of curtailing the amount of fuel consumed in the engine. That is, during idling of the engine, if automatic stop conditions are met, which conditions include that an accelerator pedal is released from being stepped on, that a brake pedal is stepped on, and that a vehicle is in a stopped state, the engine is stopped automatically by stopping fuel injection. Also, during an automatic stop of the engine, if restart conditions are met, which conditions include that a brake pedal is released from being stepped on, the starter is driven for cranking and the engine is restarted by performing fuel injection. By thus avoiding unnecessary fuel injection while a vehicle is in a stopped state, curtailment of fuel consumption and reduction of carbon dioxide emissions can be achieved.

The rail pressure needs to be raised to the predetermined value or higher for initial fuel injection. This means that, if the rail pressure is significantly low at restart of the engine, initial fuel injection cannot be performed before the rail pressure rises, whereby a prolonged period of time is required to restart the engine. Therefore, in conventional control devices, a common rail is substantially sealed during an automatic stop of an engine to prevent reduction of the rail pressure, and the rail pressure is therefore held high for the engine at restart in order to perform initial fuel injection early, so that the restart time is shortened.

### PRIOR ART DOCUMENT

### Patent Document

Patent Document 1: Japanese Laid-Open Patent Publication No. 2010-24848

### SUMMARY OF THE INVENTION

### Problems that the Invention is to Solve

In such a control device for a diesel engine, in which an automatic stop and restart are performed, while the engine is held at an automatic stop, there is actually a trace amount of fuel leakage from each part that constitutes a fuel supply system such as the fuel injection valve, the fuel pump and the pressure reducing valve. Therefore, even if the common rail is substantially sealed during an automatic stop of the engine, holding the engine at automatic stop continuously for a certain period will result in significant reduction of the rail pressure for the engine at restart. Accordingly, in terms of shortening the restart time reliably, there is still room for improvement.

These problems are not only limited to the aforementioned control device for a diesel engine, in which an automatic stop and restart are performed, but also possible to arise commonly when the engine is restarted by key operation of the driver after the engine is stopped by key operation.

Accordingly, it is an objective of the present invention to provide a control device for a diesel engine that reliably shortens the start-up time.

### Means for Solving the Problems

Means for solving the above objectives and advantages thereof will now be discussed.

In accordance with the present invention, a control device for a diesel engine is provided. The control device is applied to a diesel engine having an accumulator container for receiving pressurized fuel supplied from an engine-driven fuel pump and a fuel injection valve for injecting and supplying fuel retained in the accumulator container into a cylinder. The control device controls fuel injection through a command sent to the fuel injection valve. The control device includes a fuel pressure sensor for detecting the fuel pressure in the accumulator container, a determination section and an injection control section. The determination section determines, at restart of the engine, whether or not the fuel pressure detected by the fuel pressure sensor is higher than or equal to a lower limit value in a fuel pressure range that ensures operation of the fuel injection valve. When the determination section determines that the fuel pressure is higher than or equal to the lower limit value, the injection control section executes initial fuel injection at fuel injection timing immediately after the determination and sets an injection amount command value for the fuel injection valve performing the initial fuel injection such that the lower the fuel pressure detected by the fuel pressure sensor, the greater the injection amount command value becomes.

According to the above configuration, when the engine is started, instead of performing initial fuel injection by waiting for the pressure of fuel retained in the accumulator container to be raised high enough to ignore the degree of dependence of the fuel pressure for an actual amount of injection from the fuel injection valve, initial fuel injection is performed soon after the fuel pressure is raised to the lower limit value in the fuel pressure range that ensures operation of the fuel injection valve. It is therefore possible to shorten the length of time from the beginning of starting of the engine to performing initial fuel injection. However, in such a case where the degree of dependence of the fuel pressure is large for the actual amount of injection even though the fuel pressure is higher than or equal to the above lower limit value, the actual amount of injection will be insufficient if an injection amount command value that is set in a conventional and general manner is used, or more specifically if an injection amount command value set in a state where the fuel pressure is raised high enough to ignore the degree of dependence of the fuel pressure for an actual amount of injection is used. As a result, it is impossible to obtain a required output of the engine, leaving a concern that the start-up time of the engine cannot be shortened reliably. In this respect, according to the above configuration, an injection amount command value set for a fuel injection valve which performs initial fuel injection is made larger as the fuel pressure is lower, whereby making it possible to suppress occurrence of a problem such that an actual amount of injection is insufficient. Accordingly, the length of time to start the diesel engine can be shortened reliably.

The control device preferably includes an engine control section for automatically stopping the engine under a predetermined stop condition being met during idling of the engine and restarting the engine under a predetermined restart condition being met during an automatic stop of the engine. The determination section determines, at restart of the engine, whether or not the fuel pressure detected by the fuel pressure sensor is higher than or equal to the lower limit value. When the determination section determines that the fuel pressure is higher than or equal to the lower limit value, the injection control performs initial fuel injection at fuel injection timing immediately after the determination and sets the injection amount command value for the fuel injection valve performing the initial fuel injection such that the lower the fuel pressure detected by the fuel pressure sensor, the greater the injection amount command value becomes.

According to the above configuration, the length of time from the beginning of restart of the engine to performing initial fuel injection can be shortened. Also, the injection amount command value set for a fuel injection valve, which performs initial fuel injection, is made larger as the fuel pressure is lowered, whereby making it possible to suppress occurrence of a problem that the actual amount of injection is insufficient. Accordingly, the length of time to restart the diesel engine can be shortened reliably.

The control device preferably includes an estimation section for estimating a driving state of the fuel pump. At restart of the engine, when the estimation section estimates that the fuel pump is in a predetermined driving state, the determination section determines whether or not the fuel pressure detected by the fuel pressure sensor is higher than or equal to the lower limit value.

According to the above configuration, when the fuel pump is estimated to be in a predetermined driving state, it is determined whether or not the fuel pressure is higher than or equal to the above lower limit value. Owing to this configuration, for example, in comparison with a control mode in which such comparison between the fuel pressure and the above lower limit value is processed immediately after restart conditions are met, it is possible to avoid the above comparison process to be performed unnecessarily from the point of time at which the fuel pressure is highly likely to be less than the above lower limit value. Accordingly, the control load of the control device is prevented from being increased.

If the fuel pressure in the accumulator container when the restart condition is met is defined as a first predetermined value, the predetermined driving state is defined as a driving state of the fuel pump that ensures that, during cranking of the engine, the fuel pressure in the accumulator container becomes a second predetermined value, which is greater than the lower limit value.

The control device preferably includes a detection section and a decision section. The detection section detects, at restart of the engine, the rotational phase of the engine based on at least one of a detection result of a crank angle sensor and a detection result of a cam angle sensor. The decision section decides, upon detection of the rotational phase of the engine by the detection section, a cylinder in which initial fuel injection is to be performed based on the rotational phase of the engine. At restart of the engine, the fuel pump is brought into the predetermined driving state upon detection of the rotational phase of the engine by the detection section. Upon detection of the rotational phase of the engine by the detection section, the determination section determines whether or not the fuel pressure detected by the fuel pressure sensor is higher than or equal to the lower limit value.

If initial fuel injection can be performed at fuel injection timing which is immediately after detection of the rotational phase of the engine at restart of the engine, the restart time can be shortened reliably. In this respect, according to the above configuration, when the engine is restarted, it is determined that the fuel pump is in the above predetermined driving state upon detection of the rotational phase of the engine. Then, it is determined whether or not the fuel pressure is higher than or equal to the above lower limit value and depending on the result of the determination, it is determined whether or not the initial fuel injection should be performed. Accordingly, when the fuel pressure is higher than or equal to the above lower limit upon detection of the rotational phase of the engine, the length of time to restart the diesel engine can be shortened reliably.

For instance, it is considered to employ a configuration in which the rotational phase of the engine is detected when the engine is at an automatic stop and a cylinder for performing initial fuel injection is determined based on the rotational phase of the engine when the engine is restarted. In this case, the fuel pump can be brought into the above predetermined driving state after a predetermined period has elapsed from the start of cranking of the engine. Thus, when the above predetermined period has elapsed since the start of cranking of the engine, it is allowed to determine whether or not the fuel pressure detected by the fuel pressure sensor is higher than or equal to a lower limit value in a range that ensures operation of the fuel injection valve and depending on the result of the determination, whether or not the initial fuel injection should be performed can be determined. Therefore, when the fuel pressure is higher than or equal to the above lower limit after the above predetermined period has elapsed from the beginning of the restart of the engine, the length of time to restart the diesel engine can be shortened reliably.

Further, the fuel injection valve preferably performs multi-stage injection, which includes a first injection and a second injection, and the injection control section preferably sets the injection amount command value in each injection such that a valve closing period of the fuel injection valve exists between the first injection and the second injection performed immediately after the first injection.

In the configuration having the fuel injection valve that performs multi-stage injection, in setting an injection amount command value for a fuel injection valve that performs initial fuel injection at the restart of the engine, if an excessively large value is set for the injection amount command value in each injection according to the fuel pressure detected by the fuel pressure sensor, a problem may arise as follows. That is, if the valve opening period of the fuel injection valve in first injection overlaps with the valve opening period of the fuel injection valve in second injection, preferable fuel injection may not be performed. In this respect, according to the above configuration, the injection control section sets an injection amount command value in each injection so that a valve closing period of the fuel injection valve exists, in the multi-stage injection, between the first injection and the second injection, which is performed immediately after the first injection. It is therefore possible to avoid overlapping of the valve opening period of the fuel injection valve in the first injection with the valve opening period of the fuel injection valve in the second injection. Accordingly, it is possible to avoid failure of preferable fuel injection resulting from setting an injection amount command value in accordance with the fuel pressure.

In this case, the first injection is a pilot injection, and the second injection is a main injection. The injection control section sets the injection amount command value in each injection such that a valve closing period of the fuel injection valve exists between the pilot injection and the main injection.

### BRIEF DESCRIPTION OF THE DRAWINGS

Fig. 1 is a schematic diagram showing the structure a control device for a diesel engine according to one embodiment of the present invention;
Fig. 2 is a flowchart showing a procedure for setting processes of an injection amount command value at the restart according to the above embodiment;
Fig. 3(a) shows a map defining a relationship between an actual rail pressure and a pilot injection amount command value eTAUp in the above embodiment;
Fig. 3(b) is a map defining a relationship between an actual rail pressure and a main injection amount command value eTAUm in the above embodiment;
Figs. 4(a) and 4(b) are time charts showing one mode of transition of the injection rate in pilot injection and main injection; and
Fig. 5 is a graph showing a relationship between a rail pressure and an actual amount of injection.

### MODES FOR CARRYING OUT THE INVENTION

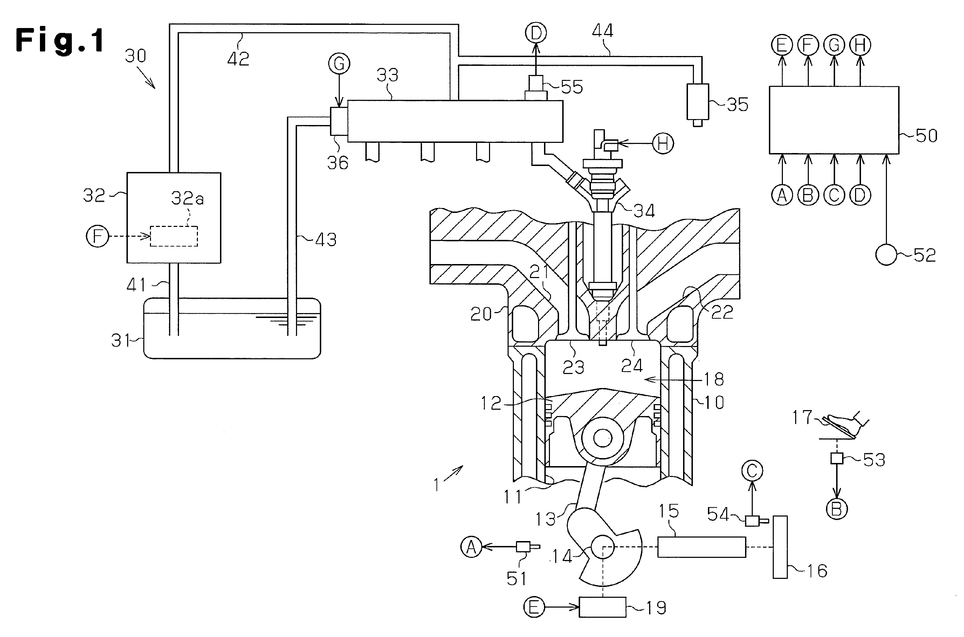

A control device for a diesel engine of a common rail type according to one embodiment of a control device for a diesel engine mounted on a vehicle will be described with reference to Figs. 1 to 4.

Fig. 1 schematically shows the structure of a diesel engine mounted on a vehicle and a control device thereof.

As shown in Fig. 1, the diesel engine (hereinafter referred to as engine 1) includes a plurality of cylinders 11 formed inside a cylinder block 10. One of the cylinders 11 is shown in Fig. 1. Each of the cylinders 11 internally contains a piston 12, which reciprocates. A cylinder head 20 is assembled above the cylinder block 10. A combustion chamber 18 is defined by the cylinder block 10, the cylinder head 20 and the piston 12. Also formed in the cylinder head 20 are an intake port 21 and an exhaust port 22 to be connected to the combustion chambers 18. An intake valve 23 and an exhaust valve 24 are also provided to switch the ports 21 and 22 to communicate with or to be disconnected from the combustion chamber 18, respectively. In the intake stroke of the engine 1, the intake valve 23 is opened and the air is drawn into the combustion chamber 18 through the intake port 21. In the exhaust stroke of the engine 1, the exhaust valve 24 is opened and burned gas left in the combustion chamber 18 is discharged through the exhaust port 22.

The pistons 12 are connected to a crankshaft 14 via connecting rods 13. While the vehicle is running, the torque of the crankshaft 14 is transmitted to drive wheels 16 through a drive force transmission mechanism 15. The drive force transmission mechanism 15 is composed of a transmission, a differential gear, an axle and other components.

Adjacent to the crankshaft 14, a starter 19 is provided to transmit starting torque to the crankshaft 14 when the engine 1 is started.

Adjacent to the crankshaft 14, a crank angle sensor 51 is provided to calculate the rotational speed of the crankshaft 14 (hereinafter referred to as engine rotational speed NE) by detecting the rotational phase of the crankshaft 14. Also, adjacent to an intake camshaft (not shown), a cam angle sensor 52 is provided to detect the rotational phase of the intake camshaft. Moreover, adjacent to an accelerator pedal 17 of the vehicle, an accelerator sensor 53 is provided to detect the amount of depression of the accelerator pedal 17 (referred to as accelerator depression amount ACCP hereinafter). Furthermore, adjacent to the drive wheel 16, a vehicle speed sensor 54 is provided to detect the rotational speed of the drive wheel 16 or the running speed of the vehicle (referred to as vehicle speed V hereinafter).

In the cylinder head 20, fuel injection valves 34 are provided to directly inject fuel to the combustion chambers 18 and fuel is supplied to the fuel injection valves 34 by a fuel supply device 30, which will be described below.

The fuel supply device 30 is provided with a fuel tank 31 for retaining fuel, a supply pump 32 driven by rotation of the crankshaft 14, a common rail 33 serving as an accumulator container, and a pressure reducing valve 36.

The supply pump 32 has a plunger, which is driven to reciprocate in synchronization with rotation of the crankshaft 14. The reciprocation of the plunger causes fuel retained in the fuel tank 31 to be drawn through a suction pipe 41. The fuel is then pressurized to be supplied under pressure to the common rail 33 via a supply pipe 42. The amount of fuel supplied by the supply pump 32 is adjusted based on opening/closing operation of a control valve 32a. The control valve 32a is opened/closed electrically.

The common rail 33 is connected to each of the fuel injection valves 34, which are provided for the cylinders 11. The common rail 33 also has the pressure reducing valve 36 for reducing the fuel pressure in the common rail 33 (referred to as rail pressure hereinafter) and a rail pressure sensor 55 for detecting the actual rail pressure (referred to as actual rail pressure PRa hereinafter). The pressure reducing valve 36 is opened/closed electrically and fuel sent from the opened pressure reducing valve 36 is returned to the fuel tank 31 via a return pipe 43.

A branch pipe 44 is connected in the middle of the supply pipe 42 and a fuel addition valve 35 for adding fuel to the exhaust system of the engine is connected the branch pipe 44.

In the engine 1, which is provided with the fuel supply device 30 as stated above, fuel that is directly injected from the fuel injection valve 34 to the combustion chamber 18 is compressed by the piston 12 and self-ignites.

The engine 1, which is provided with such a configuration, is controlled by an electronic control device 50. The electronic control device 50 has a central processing unit (referred to as CPU hereinafter), a read only memory (referred to as ROM hereinafter), a random access memory (referred to as RAM hereinafter) and an input/output port (referred to as I/O hereinafter). The CPU executes various kinds of arithmetic processes relating to controlling the engine. The ROM stores programs and data for use in controlling the engine. The RAM also temporarily stores calculation results of the CPU and detection results of various kinds of the sensors or other results. The I/O also mediates transmission of signals to/from the outside. The electronic control device 50 receives, in addition to detection signals of the rail pressure sensor 55, detection signals of the crank angle sensor 51, detection signals of the cam angle sensor 52, detection signals of the accelerator sensor 53 and detection signals of the vehicle speed sensor 54. The electronic control device 50 also receives detection results such as state of stepping on the brake pedal and shift operation position of the transmission as well as information such as engine start command and engine stop command sent from an ignition switch. The electronic control device 50 further receives information such as the temperature of cooling water of the engine (referred to as cooling water temperature hereinafter), the outdoor air temperature and the atmospheric pressure.

The electronic control device 50 controls activation of the starter 19 in order to allow cranking by transmitting the starting torque to the crankshaft 14 when the engine 1 is started. The electronic control device 50 also controls activation of the supply pump 32 based on a detection result of the rail pressure sensor 55 or other results in order to ensure a required rail pressure. The electronic control device 50 also controls activation of the fuel injection valves 34 so as to realize a desired amount and timing of injection. The electronic control device 50 also controls opening/closing of the pressure reducing valve 36 in order to suppress an excessive rise of the rail pressure.

In addition, fuel injected into the combustion chamber 18 by the fuel injection valves 34 self-ignites after a predetermined period of time has elapsed from the injection, or more specifically after ignition delay time from the injection. When such ignition delay time is prolonged, fuel that has been injected in the combustion chamber 18 is ignited instantly at a certain timing to cause a rapid increase of the pressure and temperature of the fuel. As a result, combustion noise increases with increased formation of nitrogen oxides (referred to as NOx hereinafter).

The electronic control device 50 therefore controls the fuel injection valves 34 to inject a trace amount of fuel, or perform pilot injection prior to main injection for obtaining the engine power. Owing to this control, the ignition delay time is shortened for fuel injected in main injection.

Even with no OFF operation of the ignition switch, the electronic control device 50 determines that an engine stop command is output to the engine 1 when predetermined automatic stop conditions are met, and also automatically stops the engine by making the fuel injection valves 34 to stop injecting fuel. For example, depending on whether conditions (a) to (d) shown below is met, it is determined whether or not automatic stop conditions are met.
(a) The shift operation position is the neutral position or the drive position.
(b) The vehicle speed V is a predetermined speed or less.
(c) The accelerator depression amount ACCP is 0.
(d) The brake pedal is stepped on.

When all the conditions (a) to (d) are met, automatic stop conditions are determined as being met.

Even with no ON operation of the ignition switch, the electronic control device 50 determines that an engine start command is output to the engine 1 when predetermined restart conditions are met during an automatic stop of the engine 1and restarts the engine 1 by energizing the starter 19. When even one of the above conditions (a) to (d) is not met, it is determined that automatic stop conditions are not met. That is, it is determined that restart conditions are met.

The electronic control device 50 further detects the rotational phase (0CA to 720CA) of the engine 1 based on at least one of a detection result of the crank angle sensor 51 and a detection result of the cam angle sensor 52 when the engine 1 is restarted. Then, when the rotational phase of the engine 1 is detected, the cylinder 11 for performing initial fuel injection is determined based on the rotational phase of the engine 1.

In order to stop the engine 1 automatically, the electronic control device 50 sets the rail pressure to a target rail pressure at automatic stop PRstp, which is higher than a target value of the rail pressure in idling, by controlling the degree of opening the control valve 32a of the supply pump 32 and controlling opening/closing of the pressure reducing valve 36. To be more specific, in order to stop the engine 1 automatically, while the supply pump 32 is driven by fully opening the control valve 32a, the pressure reducing valve 36 is closed when the rail pressure is less than the target rail pressure at automatic stop PRstp or the pressure reducing valve 36 is opened when the rail pressure is higher than or equal to the target rail pressure at automatic stop PRstp. In addition, during an automatic stop of the engine 1, the pressure reducing valve 36 is held closed to hold the common rail 33 substantially sealed. Owing to this control, reduction of the rail pressure is avoided and the rail pressure is held in a high state for the engine 1 at the restart. Then, by allowing initial fuel injection to be performed early, the restart time is shortened.

Meanwhile, while the engine 1 is held at an automatic stop, there is actually a trace amount of fuel leakage from each part that constitutes the fuel supply device 30 such as the fuel injection valve 34, the supply pump 32 and the pressure reducing valve 36. Therefore, even if the rail pressure is raised in response to an automatic stop of the engine 1 and the common rail 33 is held substantially sealed during an automatic stop, holding the engine 1 at an automatic stop continuously for a certain period will result in significant reduction of the rail pressure for the engine 1 at the restart. Accordingly, in terms of shortening the restart time reliably, there is still room for improvement.

Therefore, in the present embodiment, when the engine 1 is restarted, the electronic control device 50 determines, upon detection of the rotational phase of the engine 1, whether or not the actual rail pressure PRa is higher than or equal to the lower limit value PRth1 in the fuel pressure range that ensures operation of the fuel injection valves 34. If the actual rail pressure PRa is determined to be the lower limit value PRth1 or higher, initial fuel injection is performed at fuel injection timing that is immediately after the determination. Therefore, the length of time from the beginning of the restart of the engine 1 to performing initial fuel injection is shortened.

According to the present embodiment, if it is determined that the rail pressure is a first predetermined value PR1 under restart conditions being met, the supply pump 32 is brought into a driving state to ensure the rail pressure becomes a second predetermined value PR2, which is greater than the above lower limit value PRth1 (PR2 > PRth1) when the rotational phase of the engine 1 is detected during cranking of the engine 1. The first predetermined value PR1 and the second predetermined value PR2 are values to be set appropriately through experimentations or the like.

However, in a case in which the degree of dependence of the rail pressure is large for the actual amount of injection even though the actual rail pressure PRa is higher than or equal to the above lower limit value PRth1, the actual amount injection will be insufficient if an injection amount command value set in a conventional and general manner is used, or more specifically, if an injection amount command value is used that has been set in a state where the rail pressure is raised to be high enough to ignore the degree of dependence of the rail pressure for an actual amount of injection. As a result, it is impossible to obtain a required output of the engine, leaving a concern that the length of time to restart the engine cannot be shortened reliably.

Therefore, in the present embodiment, an injection amount command value eTAU set for the fuel injection valve 34 that performs initial fuel injection is made larger as the actual rail pressure PRa is lowered. Owing to this control, it is possible to suppress occurrence of a problem that the actual amount of injection is insufficient resulting from a low rail pressure.

Thus, owing to these controls, the length of time to restart the engine 1 is shortened reliably.

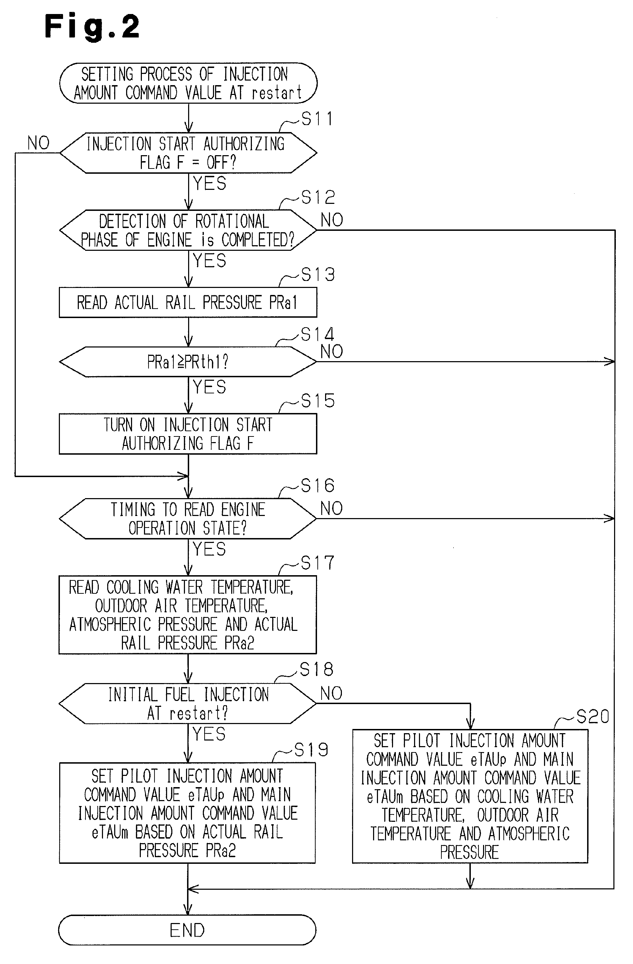

Described next with reference to a flowchart of Fig. 2 will be setting processes of an injection amount command value at the restart. The series of processes shown in the flowchart is executed repeatedly in each predetermined cycle in a period after conditions to restart the engine 1 are met and until completion of the restart. Restart completion is determined when the engine rotational speed NE becomes or exceeds a predetermined rotational speed.

As shown in Fig. 2, in the series of processes, what is determined first is whether or not an injection start authorizing flag F is OFF (Step S11). Immediately after conditions to restart the engine 1 are met, the injection start authorizing flag F is OFF. Therefore, in the initial control cycle, the injection start authorizing flag F is determined to be OFF (Step S11: YES), followed by moving onto Step S12 to determine whether or not detection of the rotational phase of the engine 1 is completed. Immediately after conditions to restart the engine 1 are met, the crankshaft 14 and the intake camshaft are not driven to rotate and detection of the rotational phase of the engine 1 is not completed yet (Step S12: NO), so that the series of processes is temporarily suspended.

In contrast, when the engine 1 is restarted with the crankshaft 14 driven to rotate by the starting torque sent from the starter 19 and the intake camshaft driven to rotate accordingly and detect of the rotational phase of the engine 1 is completed (Step S12: YES), Step S13 is executed to read the actual rail pressure PRa1 obtained at that time. Then, Step S14 is executed to determine whether or not the actual rail pressure PRa1 is higher than or equal to the lower limit value PRth1 in a fuel pressure range that ensures activation of the fuel injection valve 34. If the actual rail pressure PRa1 is determined to be the lower limit value PRth1 or higher (Step S14: YES), Step S15 is executed to turn ON the injection start authorizing flag F.

In Step S14, if the actual rail pressure PRa1 is less than the lower limit value PRth1 (Step S14: NO), the series of processes is temporarily suspended. that is, the processes from Step S11 to Step S14 are executed repeatedly until the actual rail pressure PRa1 is brought into the lower limit value PRth1 or higher by supplying fuel under pressure from the supply pump 32.

When the injection start authorizing flag F is turned ON in Step S15, it is determine whether or not this determination timing is timing to read an operation state of the engine. that is, it is determined whether or not this determination timing is timing advanced only by a predetermined crank angle from a compression top dead center (TDC) in a step of compressing the cylinder 11 in fuel injection can be performed immediately after the injection start authorizing flag F is turned ON. If the determination timing is not timing to read an operation state of the engine (Step S16: NO), the series of processes is temporarily suspended.

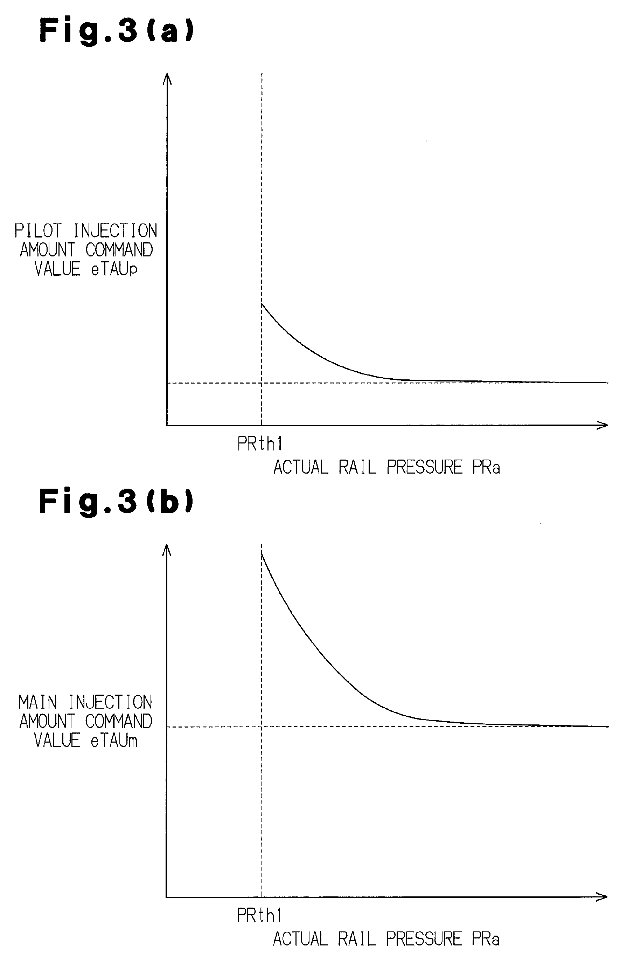

In subsequent control cycles, owing to the injection start authorizing flag F, which is ON, (Step S11: NO), Step S16 is executed to determine again whether or not the determination timing is timing to read the operation state of the engine. If the determination timing is determined to be timing to read an operation state of the engine (Step S16: YES), Step S17 is executed to read, as parameters to obtain the operation state of the engine, the cooling water temperature, outdoor air temperature, atmospheric pressure and the actual rail pressure PRa2. Then, Step S18 is executed to determine whether or not fuel injection to be performed from now is initial fuel injection at the restart. Then, if the result reveals fuel injection to be performed from now is initial fuel injection at the restart (Step S18: YES), Step S19 is executed to set a pilot injection amount command value eTAUp and a main injection amount command value eTAUm based on the actual rail pressure PRa2, and the series of processes is temporarily suspended. To be more specific, with reference to a map shown in Fig. 3(a), it is configured that the lower the actual rail pressure PRa, the greater the pilot injection amount command value eTAUp is set. Also, as shown in Fig. 3(b), the lower the actual rail pressure PRa, the greater the main injection amount command value eTAUm is set.

The actual rail pressure PRa and each of the injection amount command values eTAup and eTAUm as shown in Figs. 3(a) and 3(b) are set to have the relationship as follows. That is, the fuel injection valves 34 are accompanied by individual manufacturing variations. Therefore, in the present embodiment, in order to ensure a required amount of injection even in the fuel injection valve 34 that actually has a minimum amount of injection under the same rail pressure and the same injection amount command values, each of the injection amount command values eTAUp and eTAUm is set to be large enough to some extent by using the fuel injection valve 34 mentioned above as a reference. Also, the upper limit values of the injection amount command values eTAUp and eTAUm are set such that the actual amount of injection does not cause any problems even in the fuel injection valve 34 that actually has the maximum amount of injection under the same rail pressure and the same injection amount command values.

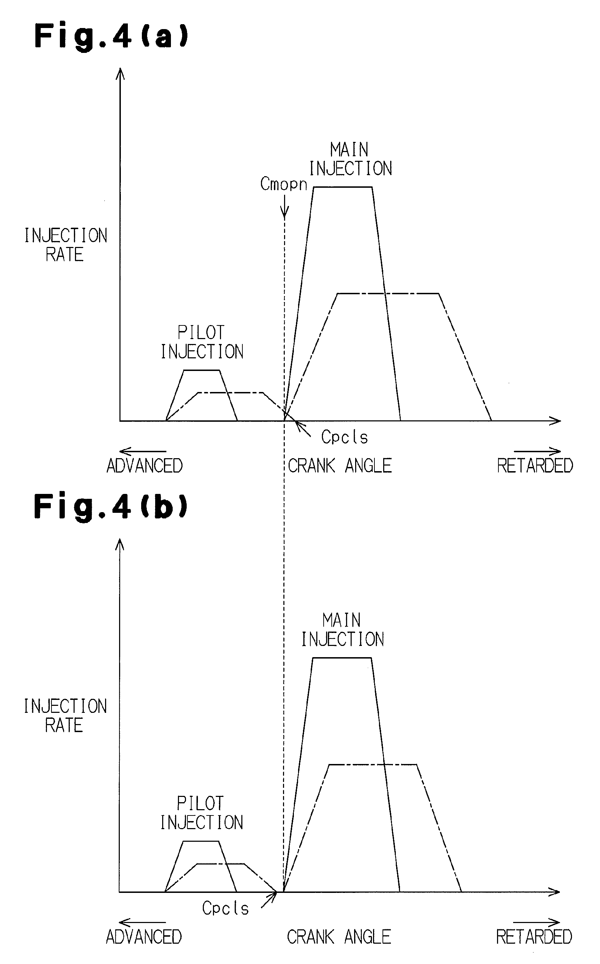

In setting the pilot injection amount command value eTAUp, a problem may arise as follows if an the pilot injection amount command value eTAUp is set to be excessively large in accordance with the actual rail pressure PRa, which is low. that is, as shown in Fig. 4(a) by alternate long and short dashed lines, fuel injection may not be performed in a favorable manner if the valve opening period of the fuel injection valve 34 in pilot injection overlaps with the valve opening period of the fuel injection valve 34 in main injection because a valve closing timing Cpcls of the fuel injection valve 34 in pilot injection is more retarded than the valve opening timing Cmopn of the fuel injection valve 34 in main injection.

Therefore, in the present embodiment, in order to avoid failure of favorable fuel injection resulting from setting the pilot injection amount command value eTAUp in accordance with the actual rail pressure PRa, the injection amount command value eTAUp in pilot injection is set as shown in Fig. 4(b) by alternate long and short dashed lines, so that the valve closing period of the fuel injection valve 34 is exists between the pilot injection and the main injection, which is performed immediately after the pilot injection. To be more specific, the valve closing timing Cpcls of the fuel injection valve 34 in the pilot injection is more advanced than the valve opening timing Cmopn of the fuel injection valve 34 in the main injection. Solid lines in Figs. 4(a) and 4(b) represent changes of the injection rate applied when the actual rail pressure PRa is sufficiently high.

As shown in Fig. 2, in Step S18, if the fuel injection is not the initial fuel injection at the restart, that is, if it is the second or a subsequent fuel injection (Step S18: NO), Step S20 is executed to set each of the injection amount command values eTAUp and eTAUm based on the cooling water temperature, the outdoor air temperature and the atmospheric pressure, and the series of processes is temporarily suspended. More specifically, by considering the fact that restartability is lowered as the cooling water temperature is lowered, the outdoor air temperature is lowered or the atmospheric pressure is lowered, each of the injection amount command values eTAUp and eTAUm is set higher as the cooling water temperature is lowered, the outdoor air temperature is lowered or the atmospheric pressure is lowered.

The control device for a diesel engine according to the present embodiment as described above achieves the following advantages.
(1) In the present embodiment, it is determined through the electronic control device 50 at the restart of the engine 1 whether or not the actual rail pressure PRa is higher than or equal to the lower limit value PRth1 in a fuel pressure range that ensures operation of the fuel injection valves 34. Then, when the actual rail pressure PRa is determined to be the lower limit value PRth1 or higher, initial fuel injection is performed at fuel injection timing that is immediately after the determination, and the injection amount command value eTAU set for the fuel injection valve 34 that performs the initial fuel injection is made higher as the actual rail pressure PRa is lower. Owing to such a control configuration, when the engine 1 is restarted, instead of performing initial fuel injection by waiting for the rail pressure to be raised to be high enough such that the degree of dependence of the rail pressure for the actual amount of injection from the fuel injection valve 34 can be ignored, the initial fuel injection is performed soon after the rail pressure is raised to the lower limit value PRth1 in a fuel pressure range that ensures operation of the fuel injection valve 34. Therefore, it is possible to shorten the length of time from the beginning of restarting of the engine 1 to performing initial fuel injection. The above control configuration also makes it possible to suppress occurrence of a problem such as an insufficient actual amount of injection because the injection amount command value eTAU set for the fuel injection valve 34 that performs initial fuel injection is made larger as the rail pressure is lower. Accordingly, the length of time to restart the diesel engine 1 can be shortened reliably.
(2) Moreover, in the present embodiment, the rotational phase of the engine 1 is detected based on at least one of a detection signal of the crank angle sensor 51 and a detection signal of the cam angle sensor 52 when the engine 1 is restarted. Also, when the rotational phase of the engine 1 is detected, the cylinder 11 in the initial fuel injection is to be performed is determined based on the rotational phase of the engine 1. If it is determined that the rail pressure is the first predetermined value PR1 when the restart conditions are met, the supply pump 32 is brought into a predetermined driving state upon detection of the rotational phase of the engine 1 during cranking of the engine 1, or more specifically brought into a driving state to ensure that the rail pressure becomes the second predetermined value PR2, which is greater than the above lower limit value PRth1 (PR2 > PRth1). Then, the electronic control device 50 determines, upon detection of the rotational phase of the engine 1, whether or not the actual rail pressure PRa is higher than or equal to the lower limit value PRth1.

If initial fuel injection can be performed at fuel injection timing that is immediately after detection of the rotational phase of the engine 1, the restart time can be shortened reliably. In this respect, according to the above control configuration, when the rotational phase of the engine 1 is detected, it is determined that the supply pump 32 has been brought into the above predetermined driving state. Then, it is determined whether or not the rail pressure is higher than or equal to the above lower limit value PRth1. Based on the result of the determination, it is determined whether or not the initial fuel injection should be performed. Therefore, when the rail pressure is higher than or equal to the above lower limit value PRth1 upon detection of the rotational phase of the engine 1, the length of time to restart the diesel engine 1 can be shortened reliably.

Moreover, according to the above configuration, when the rotational phase of the engine 1 is detected, it is determined whether or not the actual rail pressure PRa is higher than or equal to the lower limit value PRth1. Therefore, for instance, unlike a control mode in which the actual rail pressure PRa and the above lower limit value PRth1 are compared immediately after restart conditions were met, it is possible to avoid the comparison process from being carried out unnecessarily from the point of time at which the actual rail pressure PRa is highly likely to be less than the above lower limit value PRth1. Accordingly, the control load of the electronic control device 50 is prevented from being increased.
(3) Through the electronic control device 50, the pilot injection amount command value eTAUp is set such that the valve closing period of the fuel injection valve 34 is exists, in the multi-stage injection, between the pilot injection and the main injection, which is performed immediately after the pilot injection. Such a control configuration makes it possible to avoid overlapping of the valve opening period of the fuel injection valve 34 in the pilot injection and the valve opening period of the fuel injection valve 34 in the main injection. Accordingly, it is possible to avoid failure of favorable fuel injection resulting from setting the pilot injection amount command value eTAUp in accordance with the actual rail pressure PRa.

The control device for a diesel engine according to the present invention is not limited to the configurations exemplified in the above embodiment, but may be modified as described below.

In the above embodiment, the first injection in multi-stage injection is pilot injection and the second injection, which is performed immediately after the first injection, is main injection. However, the first injection and the second injection according to the present invention are not limited to the above embodiment. For example, in a configuration of performing pre-injection between pilot injection and main injection, the first injection may be the pilot injection and the second injection may be the pre-injection. The first injection may also be the pre-injection and the second injection may be the main injection. In these cases, the injection amount command value is also set in each injection such that the valve closing period of the fuel injection valve exists, in multi-stage injection, between the first injection and the second injection, which is performed immediately after the first injection.

As described in the above embodiment, in the configuration of detecting the rotational phase of the engine 1 at the restart of the engine 1 and determining, upon detection of the rotational phase of the engine 1, the cylinder 11 in which initial fuel injection is to be performed based on the rotational phase of the engine 1, it is desirable to determine upon detection of the rotational phase of the engine 1 whether or not the actual rail pressure PRa is higher than or equal to the lower limit value PRth1 in order to avoid the above comparison process from being performed unnecessarily from the point of time at which the actual rail pressure PRa is highly likely to be less than the above lower limit value PRth1. However, the present invention is not limited to detecting the rotational phase of the engine 1 at the restart of the engine 1. For example, the rotational phase of the engine 1 may be detected when the engine 1 is stopped automatically and a cylinder in which initial fuel injection is to be performed may be determined based on the rotational phase of the engine 1 when the engine is restarted. In this case, the supply pump 32 should be brought into the aforementioned predetermined driving state after a predetermined period has elapsed from the start of cranking of the engine 1, or more specifically, brought into a driving state to ensure that the rail pressure becomes the second predetermined value PR2, which is greater than the above lower limit value PRth1. Then, when the above predetermined period has elapsed since the start of cranking of the engine 1, it should be determined whether or not the actual rail pressure PRa is higher than or equal to the lower limit value PRth1 in a range that ensures operation of the fuel injection valve 34. Based on the result of the determination, it should be determined whether or not the initial fuel injection should be performed. Therefore, when the rail pressure is determined to be the above lower limit value PRth1 or higher after the above predetermined period has elapsed from the beginning of restarting of the engine 1, the length of time to restart the engine 1 can be shortened reliably.

In the above embodiment, at the restart of the engine 1, when the supply pump 32 is estimated to be in the above predetermined driving state, it is determined whether or not the actual rail pressure PRa is higher than or equal to the lower limit value PRth1 in a fuel pressure range that ensures operation of the fuel injection valve 34. However, the present invention is not limited to the above embodiment, but may be configured such that the actual rail pressure PRa is detected in each predetermined cycle after conditions to restart the engine 1 are met, and it is determined whether or not the actual rail pressure PRa is higher than or equal to the lower limit value PRth1.

Although the present invention is applied when the engine 1 is restarted in the above embodiment, the present invention is not limited to application at the restart of the engine, but applicable at a normal start, or start-by-key. Even in this case, by shorting the length of time from the beginning of the restarting of the engine to performing initial fuel injection, the start-up time of the diesel engine can be shortened reliably.

### DESCRIPTION OF THE REFERENCE NUMERALS

- 1.: DIESEL ENGINE
- 10.: CYLINDER BLOCK
- 11.: CYLINDER
- 12.: PISTON
- 13.: CONNECTING ROD
- 14.: CRANKSHAFT
- 15.: DRIVE FORCE TRANSMISSION MECHANISM
- 16.: DRIVING WHEEL
- 17.: ACCELERATOR PEDAL
- 18.: COMBUSTION CHAMBER
- 19.: STARTER
- 20.: CYLINDER HEAD
- 21.: INTAKE PORT
- 22.: EXHAUST PORT
- 23.: INTAKE VALVE
- 24.: EXHAUST VALVE
- 30.: FUEL SUPPLY DEVICE
- 31.: FUEL TANK
- 32.: SUPPLY PUMP (FUEL PUMP)
- 32a.: CONTROL VALVE
- 33.: COMMON RAIL
- 34.: FUEL INJECTION VALVE
- 35.: FUEL ADDITION VALVE
- 36.: PRESSURE REDUCING VALVE
- 41.: INTAKE PIPE
- 42.: SUPPLY PIPE
- 43.: RETURN PIPE
- 50.: ELECTRONIC CONTROL DEVICE (ESTIMATION SECTION, DETERMINATION SECTION, INJECTION CONTROL SECTION, ENGINE CONTROL SECTION, DETECTION SECTION AND DECISION SECTION)
- 51.: CRANKANGLE SENSOR
- 52.: CAM ANGLE SENSOR
- 53.: ACCELERATOR SENSOR
- 54.: VEHICLE SPEED SENSOR
- 55.: RAIL PRESSURE SENSOR

## Claims

1. A control device for a diesel engine, the control device being applied to a diesel engine having an accumulator container for receiving pressurized fuel supplied from an engine-driven fuel pump and a fuel injection valve for injecting and supplying fuel retained in the accumulator container into a cylinder, wherein the control device controls fuel injection through a command sent to the fuel injection valve, the control device comprising:
a fuel pressure sensor for detecting the fuel pressure in the accumulator container;
a determination section for determining, at restart of the engine, whether or not the fuel pressure detected by the fuel pressure sensor is higher than or equal to a lower limit value in a fuel pressure range that ensures operation of the fuel injection valve; and
an injection control section, wherein when the determination section determines that the fuel pressure is higher than or equal to the lower limit value, the injection control section executes initial fuel injection at fuel injection timing immediately after the determination and sets an injection amount command value for the fuel injection valve performing the initial fuel injection such that the lower the fuel pressure detected by the fuel pressure sensor, the greater the injection amount command value becomes.

2. The control device for a diesel engine according to claim 1, **characterized by** an engine control section for automatically stopping the engine under a predetermined stop condition being met during idling of the engine and restarting the engine under a predetermined restart condition being met during an automatic stop of the engine, wherein
the determination section determines, at restart of the engine, whether or not the fuel pressure detected by the fuel pressure sensor is higher than or equal to the lower limit value, and
when the determination section determines that the fuel pressure is higher than or equal to the lower limit value, the injection control performs initial fuel injection at fuel injection timing immediately after the determination and sets the injection amount command value for the fuel injection valve performing the initial fuel injection such that the lower the fuel pressure detected by the fuel pressure sensor, the greater the injection amount command value becomes.

3. The control device for a diesel engine according to claim 2, **characterized by** an estimation section for estimating a driving state of the fuel pump,
wherein at restart of the engine, when the estimation section estimates that the fuel pump is in a predetermined driving state, the determination section determines whether or not the fuel pressure detected by the fuel pressure sensor is higher than or equal to the lower limit value.

4. The control device for a diesel engine according to claim 3, **characterized in that**, if the fuel pressure in the accumulator container when the restart condition is met is defined as a first predetermined value, the predetermined driving state is defined as a driving state of the fuel pump that ensures that, during cranking of the engine, the fuel pressure in the accumulator container becomes a second predetermined value, which is greater than the lower limit value.

5. The control device for a diesel engine according to claim 4, **characterized by**:
a detection section for detecting, at restart of the engine, the rotational phase of the engine based on at least one of a detection result of a crank angle sensor and a detection result of a cam angle sensor; and
a decision section for deciding, upon detection of the rotational phase of the engine by the detection section, a cylinder in which initial fuel injection is to be performed based on the rotational phase of the engine, wherein
at restart of the engine, the fuel pump is brought into the predetermined driving state upon detection of the rotational phase of the engine by the detection section, and
upon detection of the rotational phase of the engine by the detection section, the determination section determines whether or not the fuel pressure detected by the fuel pressure sensor is higher than or equal to the lower limit value.

6. The control device for a diesel engine according to claim 4, **characterized in that** the fuel pump is brought into the predetermined driving state after a predetermined period has elapsed from the start of cranking of the engine, and
when the predetermined period has elapsed from the start of cranking of the engine, the determination section determines whether or not the fuel pressure detected by the fuel pressure sensor is higher than or equal to the lower limit value.

7. The control device for a diesel engine according to any one of claims 1 to 6, **characterized in that**
the fuel injection valve performs multi-stage injection, which includes a first injection and a second injection, and
the injection control section sets the injection amount command value in each injection such that a valve closing period of the fuel injection valve exists between the first injection and the second injection performed immediately after the first injection.

8. The control device for a diesel engine according to claim 7, **characterized in that**
the first injection is a pilot injection,
the second injection is a main injection, and
the injection control section sets the injection amount command value in each injection such that a valve closing period of the fuel injection valve exists between the pilot injection and the main injection.
